# EUROPÄISCHE PATENTSCHRIFT

(11) **EP 2 840 017 B1**
(45) Veröffentlichungstag und Bekanntmachung des Hinweises auf die Patenterteilung: **06.05.2026**
(21) Anmeldenummer: 14173396.4
(22) Anmeldetag: 23.06.2014
(51) Int. Cl.: B62M 6/45

(54) **Mit Muskelkraft und/oder Motorkraft betreibbares Fahrzeug sowie Verfahren zum Betreiben des Fahrzeugs**
Vehicle that can be operated using muscle power and/or engine power and method for operating the vehicle
Véhicule actionné par la force des muscles ou par la puissance d'un moteur et procédé de fonctionnement du véhicule

(30) Priorität: 22.08.2013 DE 102013216723
(43) Veröffentlichungstag der Anmeldung: 25.02.2015
(73) Patentinhaber: Robert Bosch GmbH, 70442 Stuttgart (DE)
(72) Erfinder: Stegmaier, Juergen, 71638 Ludwigsburg (DE)

(56) Entgegenhaltungen:
- EP-A1- 0 687 454
- EP-A1- 2 436 589
- EP-A1- 2 444 311
- EP-A2- 0 738 653
- EP-A2- 1 236 640
- JP-A- 2003 054 480
- JP-A- 2005 041 352
- JP-A- H08 295 285

## Beschreibung

### Stand der Technik

Die vorliegende Erfindung betrifft ein mit Muskelkraft und/oder Motorkraft betreibbares Fahrzeug, insbesondere ein Elektrofahrrad, sowie ein Verfahren zum Betreiben des mit Muskelkraft und/oder Motorkraft betreibbaren Fahrzeugs.

Derartige Fahrzeuge sind beispielsweise als Elektrofahrräder mit einem zusätzlichen elektrischen Antrieb bekannt, wobei der elektrische Antrieb ein Fahren des Fahrzeugs beim Pedalieren bis zu einer vorbestimmten Höchstgeschwindigkeit (z.B. 25 km/h) unterstützen kann. Bei derartigen Elektrofahrrädern kann ferner die Anforderung bestehen, den elektrischen Antrieb auszuschalten, sobald der Fahrer ein Pedalieren einstellt. Derartige Elektrofahrräder umfassen häufig einen Sensor zur Bestimmung einer Kurbelposition und/oder einen Drehzahlsensor, um eine Drehzahl der Kurbel zu bestimmen. Mit diesen Sensoren kann ein Pedalstillstand erkannt werden und das Abschalten des elektrischen Antriebs eingeleitet werden. Eine Alternative zu diesen Sensoren basiert auf einer Auswertung eines Drehmomentverlaufs an der Tretwelle. Ein Abschaltkriterium muss hierbei sein, dass kein von einem Fahrer aufgebrachtes Fahrerdrehmoment mehr gemessen wird. Aufgrund des oberen und unteren Totpunkts des Kurbeltriebs ist an der Tretwelle ein sinusförmiger Signalverlauf des Fahrerdrehmoments erfassbar. Dieser Ansatz würde jedoch zu einem unerwünschten, periodischen Abschalten des elektrischen Antriebs am unteren Totpunkt des Kurbeltriebs führen. Daher wird in der Praxis eine Überwachungseinrichtung vorgesehen, welche bei Unterschreiten einer definierten Fahrerdrehmomentschwelle einen Zähler startet. Steigt das Fahrerdrehmoment nicht innerhalb einer definierten festen Zeitspanne wieder an, wird der elektrische Antrieb abgeschaltet. Die Dauer dieser vorbestimmten Zeitspanne ist dabei konstant. Aufgrund dieser vorbestimmten Zeitspanne, in welcher der elektrische Antrieb noch nicht unterbrochen wird, wird das Elektrofahrrad weiter durch den elektrischen Antrieb angetrieben, obwohl der Fahrer aufgehört hat zu pedalieren. Dies wird von vielen Fahrern jedoch als störend empfunden, da das Elektrofahrrad den Fahrerwunsch nicht unmittelbar umsetzt. Ein weiterer Problemkreis ergibt sich insbesondere bei Nabenschaltungen, da das Nachlaufen des elektrischen Antriebs beim Schalten ungünstig ist, da ein Gangwechsel bei Nabenschaltungen nicht unter hohen Kettenkräften erfolgen kann. Somit muss der Fahrer nach Einstellen des Pedalierens noch die vorbestimmte Zeitspanne abwarten, bis ein Gangwechsel erfolgreich möglich ist. Auch ein Reduzieren der vorbestimmten Zeitdauer, mit welcher der elektrische Antrieb nachläuft, löst das Problem nicht, da insbesondere bei geringen und unregelmäßigen Trittfrequenzen mit ausgeprägten Tiefpunkten des muskelerzeugten Drehmoments die Unterstützung durch den elektrischen Antrieb regelmäßig unterbrochen werden würde. Dies führt jedoch zu einem sehr ruppigen und unkomfortablen Fahrverhalten.

EP 0 738 653 A2 offenbart die folgenden Merkmale von Anspruch 1: Mit Muskelkraft und/oder Motorkraft betreibbares Fahrzeug, insbesondere Elektrofahrrad, umfassend:-einen Kurbeltrieb, über welchen ein von einem Fahrer erzeugtes Fahrerdrehmoment einbringbar ist, einen elektrischen Antrieb, welcher ein Antriebsdrehmoment aufbringen kann, und- eine Steuereinheit, welche eingerichtet ist, den elektrischen Antrieb bei Nichtvorhandensein des Fahrerdrehmoments abzuschalten, wobei die Steuereinheit welche sicherstellt, dass der elektrische Antrieb noch für eine vorbestimmte Zeitspanne betrieben wird, und wobei eine Dauer der vorbestimmten Zeitspanne variabel in Abhängigkeit einer Trittfrequenz des Fahrers ist.

EP 0 738 653 A2 offenbart die folgenden Merkmale von Anspruch 8: Verfahren zum Betreiben eines mit Muskelkraft und/oder Motorkraft betreibbaren Fahrzeugs, insbesondere Elektrofahrrad, wobei das Fahrzeug einen Kurbeltrieb und einen elektrischen Antrieb umfasst, umfassend die Schritte: Bestimmen einer Trittfrequenz, mit welcher ein Fahrer den Kurbeltrieb betätigt, und Bestimmen einer vorbestimmten Zeitspanne, über welche der elektrische Antrieb noch betrieben werden soll, wobei die vorbestimmte Zeitspanne variabel in Abhängigkeit der Trittfrequenz bestimmt wird.

### Offenbarung der Erfindung

### Das erfindungsgemäße mit Muskelkraft und/oder Motorkraft betreibbare

Fahrzeug mit den Merkmalen des Anspruchs 1 weist demgegenüber den Vorteil auf, dass eine Anpassung des Abschaltverhaltens für einen elektrischen Antrieb an die jeweilige Fahrsituation möglich ist. Erfindungsgemäß kann dabei bei sehr einfachem und kostengünstigem Aufbau eine sichere Erfassung eines Einstellens des Pedalierens durch den Fahrer erfasst werden und somit eine schnelle Abschaltung des elektrischen Antriebs ermöglicht werden. Durch die Reduzierung der Nachlaufeigenschaften des elektrischen Antriebs kann ferner auch eine Sicherheit des Fahrzeugs erhöht werden. Ferner sind insbesondere bei Nabenschaltungen schnellere Schaltvorgänge möglich. Weiterhin kann durch den erfindungsgemäß möglichen kürzeren Nachlauf des elektrischen Antriebs ein Stromverbrauch des elektrischen Antriebs reduziert werden und somit eine Reichweite vergrößert werden. Dies wird erfindungsgemäß dadurch erreicht, dass das Fahrzeug einen Kurbeltrieb, und einen elektrischen Antrieb, welcher zusätzlich ein Antriebsdrehmoment aufbringen kann, umfasst. Ferner umfasst das Fahrzeug eine Steuereinheit, welche eingerichtet ist, den elektrischen Antrieb bei Nichtvorhandensein des Fahrerdrehmoments abzuschalten. Die Steuereinheit umfasst eine Überwachungseinrichtung, welche sicherstellt, dass bei Unterschreiten eines vorbestimmten Fahrerdrehmoments der elektrische Antrieb noch für eine vorbestimmte Zeitspanne betrieben wird. Dabei wird eine Dauer der vorbestimmten Zeitspanne variabel in Abhängigkeit einer Trittfrequenz des Fahrers am Kurbeltrieb bestimmt. Somit wird erfindungsgemäß eine variable Zeitspanne für den Nachlauf des elektrischen Antriebs definiert, welche von der Trittfrequenz des Fahrers abhängt. Dadurch kann erfindungsgemäß ein ungewolltes, zu langes Nachlaufen des elektrischen Antriebs vermieden werden, nachdem der Fahrer mit dem Pedalieren aufgehört hat.

Die Unteransprüche zeigen bevorzugte Weiterbildungen der Erfindung.

Vorzugsweise ist die Steuereinheit eingerichtet, die variable vorbestimmte Zeitspanne mit steigender Tretfrequenz kürzer zu setzen. Hierbei wird berücksichtigt, dass mit steigender Trittfrequenz eine Zeitspanne um den unteren Totpunkt herum kürzer wird, so dass eine kürzere Nachlaufzeit für den elektrischen Antrieb ausreichend ist.

Weiter bevorzugt ist die Steuereinheit eingerichtet, die Trittfrequenz des Fahrers in Abhängigkeit einer Drehzahl des elektrischen Antriebs zu bestimmen. Hierbei können Daten, welche üblicherweise bei derartigen Fahrzeugen sowieso schon erfasst werden, nämlich die Drehzahl des elektrischen Antriebs, zusätzlich dazu verwendet werden, die Trittfrequenz des Fahrers zu bestimmen. Dies ist deshalb möglich, da bei derartigen Fahrzeugen die Drehzahl des elektrischen Antriebs üblicherweise durch das vom Fahrer aufgebrachte Fahrerdrehmoment bestimmt wird.

Alternativ ist die Steuereinrichtung eingerichtet, die Trittfrequenz des Fahrers in Abhängigkeit eines Maximums des Fahrerdrehmoments und/oder eines Minimums des Fahrerdrehmoments zu bestimmen. Das Maximum des Fahrerdrehmoments ist üblicherweise am oberen Totpunkt des Kurbeltriebs erreicht und das Minimum des Drehmoments ist üblicherweise am unteren Totpunkt des Kurbeltriebs erreicht. Auch hierbei ist üblicherweise kein zusätzlicher Sensor notwendig, sondern die sowieso schon erfassten Daten des Fahrerdrehmoments können zusätzlich zur Bestimmung der Trittfrequenz verwendet werden.

Weiter alternativ umfasst das Fahrzeug ferner einen Sensor zur direkten Bestimmung der Trittfrequenz des Fahrers.

Um eine möglichst ruckfreie Anpassung des Nachlaufens des elektrischen Antriebs sicherzustellen, ist die Steuereinheit eingerichtet, die vorbestimmte variable Zeitspanne kontinuierlich an die Trittfrequenz des Fahrers anzupassen.

Für einen besonders kompakten Aufbau ist vorzugsweise der elektrische Antrieb am Kurbeltrieb des Fahrzeugs angeordnet. Insbesondere bei Elektrofahrrädern kann dadurch ein sehr tiefer Schwerpunkt erreicht werden und ein Antriebsdrehmoment des elektrischen Antriebs direkt an den Kurbeltrieb abgegeben werden.

Besonders bevorzugt ist das erfindungsgemäße Fahrzeug ein Elektrofahrrad und dabei insbesondere ein sogenanntes Pedelec.

Weiterhin betrifft die vorliegende Erfindung ein Verfahren zum Betreiben eines mit Muskelkraft und/oder Motorkraft betreibbaren Fahrzeugs, insbesondere eines Elektrofahrrads, wobei das Fahrzeug einen Kurbeltrieb zum Einbringen eines Fahrerdrehmoments sowie einen elektrischen Antrieb umfasst. Das erfindungsgemäße Verfahren umfasst dabei die Schritte des Bestimmens einer Trittfrequenz, mit welcher ein Fahrer den Kurbeltrieb betätigt und des Bestimmens einer vorbestimmten Zeitspanne, über welche der elektrische Antrieb noch, nachdem ein Fahrer mit dem Pedalieren aufgehört hat, betrieben werden soll, wobei die vorbestimmte Zeitspanne variabel in Abhängigkeit der Trittfrequenz des Fahrers bestimmt wird. Mit anderen Worten ist erfindungsgemäß vorgesehen, dass für jede Trittfrequenz, mit welcher der Fahrer ein Fahrerdrehmoment auf das Fahrzeug ausüben kann, eine andere vorbestimmte Zeitspanne bestimmt wird. Somit kann erfindungsgemäß die vorbestimmte Zeitspanne immer variabel an die jeweilige Trittfrequenz des Fahrers angepasst werden und somit ein unerwünscht langes Nachlaufen des elektrischen Antriebs vermieden werden.

Wie bei dem erfindungsgemäßen Fahrzeug schon erläutert, wird die Trittfrequenz vorzugsweise ohne separaten Sensor, sondern mittels einer Drehzahl des elektrischen Antriebs und/oder mittels eines Maximums und/oder Minimums des Fahrerdrehmoments bestimmt. Alternativ kann auch ein separater Sensor zur Bestimmung der Trittfrequenz des Fahrers vorgesehen sein.

Weiter bevorzugt wird die vorbestimmte Zeitspanne, mit welcher der elektrische Antrieb nachläuft, kontinuierlich an die Trittfrequenz des Fahrers angepasst. Vorzugsweise wird dabei nach jeder Umdrehung eine neue vorbestimmte Zeitspanne durch die Steuereinrichtung berechnet und als vorbestimmte Zeitspanne ausgegeben, falls der Fahrer mit dem Pedalieren aufhört.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Elektrofahrrads gemäß einem bevorzugten Ausführungsbeispiel der Erfindung,
- Figur 2: ein Diagramm, welches ein vom Fahrer aufgebrachtes Fahrerdrehmoment über der Zeit zeigt, und
- Figur 3: ein Diagramm, welches eine vorbestimmte Zeit eines Nachlaufens eines elektrischen Antriebs des Elektrofahrrads über der Trittfrequenz des Fahrers zeigt.

### Bevorzugte Ausführungsform der Erfindung

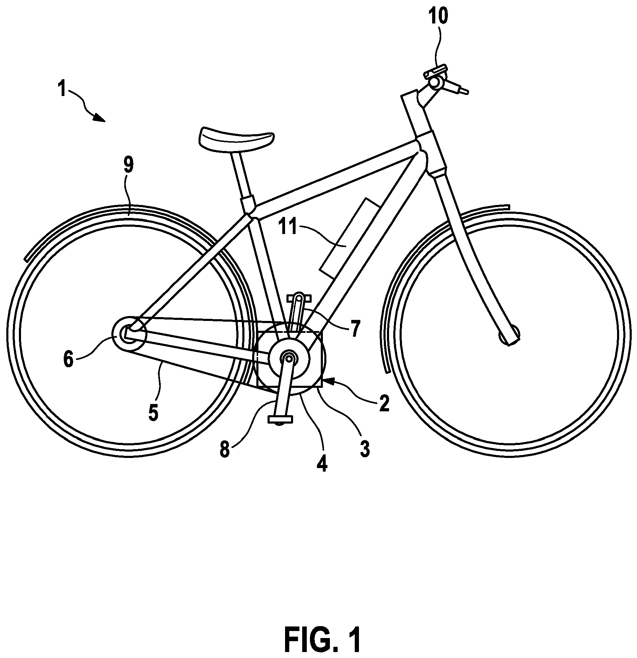

Nachfolgend wird unter Bezugnahme auf die Figuren 1 bis 3 ein Elektrofahrrad 1 gemäß einem bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8, an welchen Pedale angeordnet sind. Ferner ist ein elektrischer Antrieb 3 vorgesehen, welcher am Kurbeltrieb 2 angeordnet ist. Am Hinterrad 9 des Elektrofahrrads ist eine Gangschaltung 6 vorgesehen.

Ein Antriebsmoment kann dabei vom Fahrer in Form eines Fahrerdrehmoments und/oder durch den elektrischen Antrieb 3 bereitgestellt werden und wird von einem Kettenblatt 4 am Kurbeltrieb 2 über eine Kette 5 auf ein Ritzel der Gangschaltung 6 übertragen.

Am Lenker des Elektrofahrrads 1 ist ferner eine Steuereinheit 10 angeordnet, welche mit dem elektrischen Antrieb 3 verbunden ist. Mit dem Bezugszeichen 11 ist weiterhin ein Akkumulator bezeichnet, welcher zur Stromversorgung des elektrischen Antriebs 3 dient.

Die Steuereinheit 10 umfasst ferner insbesondere auch eine mechanische Schnittstelle zum Fahrer, beispielsweise Druckknöpfe oder Schieber oder dergleichen, mit welchen der Fahrer eine gewünschte Unterstützung durch den elektrischen Antrieb 3 einstellen kann.

Es sei angemerkt, dass die Steuereinheit 10 insbesondere auch in den elektrischen Antrieb 3 integriert sein kann und am Lenker lediglich eine mechanische Schnittstelle für den Fahrer vorgesehen ist.

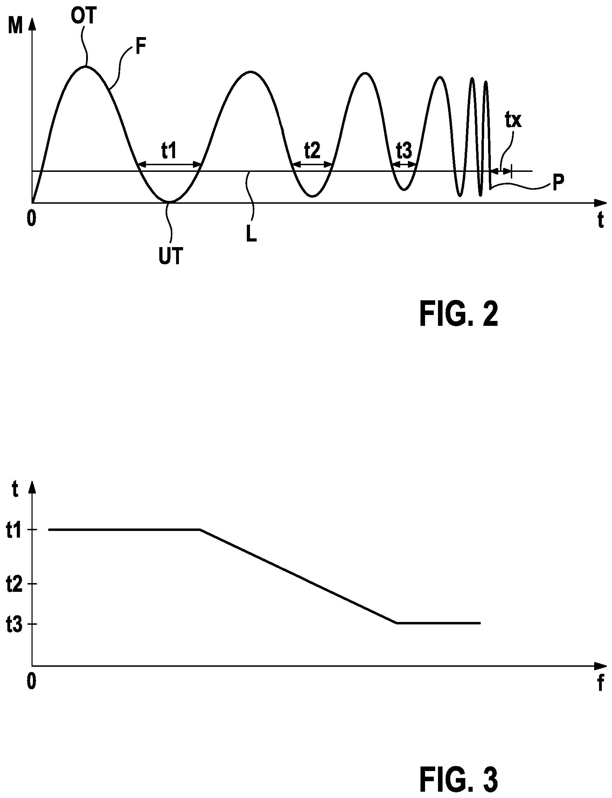

Erfindungsgemäß ist die Steuereinheit 10 nun derart eingerichtet, dass der elektrische Antrieb 3 bei Nichtvorhandensein eines vom Fahrer aufgebrachten Fahrerdrehmoments abgeschaltet wird. Hierzu umfasst die Steuereinheit 10 eine Überwachungseinrichtung, welche sicherstellt, dass bei Unterschreiten eines vorbestimmten Fahrerdrehmoments der elektrische Antrieb 3 noch eine vorbestimmte Zeitspanne betrieben wird. Dadurch wird vermieden, dass bei dem sinusförmig auftretenden Fahrerdrehmoment, welches insbesondere in Figur 2 ersichtlich ist, der elektrische Antrieb automatisch bei Erreichen des unteren Totpunkts UT abgeschaltet wird, in welchem das Fahrerdrehmoment gleich Null ist.

In Figur 2 ist das Fahrerdrehmoment M über der Zeit t dargestellt. An der sinusförmigen Kurve F kann dabei der obere Totpunkt OT und der untere Totpunkt UT festgestellt werden. Wie weiter aus Figur 2 ersichtlich ist, ist eine untere Schwelle für das Fahrerdrehmoment M vorgesehen, welche durch die Linie L angedeutet ist. Wie aus Figur 2 ersichtlich ist, wird das Fahrerdrehmoment M immer geringer, je näher sich die Drehmomentkurve dem unteren Totpunkt UT nähert.

Um nun zu vermeiden, dass der elektrische Antrieb 3 durch die Steuereinheit 10 abgeschaltet wird, wird ab der Linie L, welche die Drehmomentschwelle kennzeichnet, die Überwachungseinrichtung der Steuereinheit 10 angewiesen, sicherzustellen, dass trotz des Unterschreitens des vorbestimmten Fahrerdrehmoments (Linie L) der elektrische Antrieb 3 noch eine vorbestimmte Zeitspanne weiter betrieben wird. In Figur 2 sind dabei drei unterschiedliche Zeitspannen t1, t2 und t3 dargestellt. Hierbei wird deutlich, dass bei dem dargestellten Ausführungsbeispiel im Lauf der Zeit t die Trittfrequenz des Fahrers immer höher wird, und die Zeitspannen t1, t2, t3 immer kürzer werden. Hierbei werden auch die vorbestimmten Zeitdauern, über welche die Überwachungseinrichtung den elektrischen Motor 3 weiter antreibt, immer kürzer.

Wie aus Figur 2 ersichtlich ist, ist die erste Zeitdauer t1 größer als die zweite Zeitdauer t2 und die zweite Zeitdauer t2 ist größer als die dritte Zeitdauer t3.

Somit ist die erfindungsgemäße Steuereinheit 10 eingerichtet, die jeweiligen Dauern t1, t2, t3 der vorbestimmten Zeitspannen variabel in Abhängigkeit der Trittfrequenz des Fahrerdrehmoments M vorzugeben. Dadurch wird sichergestellt, dass bei einer relativ niedrigen Trittfrequenz der elektrische Antrieb 3 nicht zu früh abgeschaltet wird und bei einer relativ hohen Trittfrequenz der elektrische Antrieb 3 nicht allzu lange nachangetrieben wird, sobald der Fahrer mit dem Pedalieren aufhört. In Figur 2 hört der Fahrer am Punkt P mit dem Pedalieren auf, so dass die Steuereinheit 10 noch eine kurze vorbestimmte Zeitspanne tx vorgibt, in welcher der elektrische Antrieb 3 noch betrieben.

Somit ist erfindungsgemäß sichergestellt, dass mit steigender Trittfrequenz durch den Fahrer die Zeitspanne t1, t2, t3, tx sinkt, in welcher das Fahrerdrehmoment die Schwelle L unterschreitet. Hierbei ist entsprechend zur Figur 2 in Figur 3 die maximale Zeitdauer t über der Trittfrequenz f dargestellt.

Durch die bei einer steigenden Trittfrequenz f kontinuierlich absinkende Zeitdauer t für den Nachlauf des elektrischen Antriebs 3 wird ein Nachschiebeverhalten des elektrischen Antriebs deutlich verbessert (kürzer), ohne dass es dabei in den Totpunkten, insbesondere den unteren Totpunkten, der Pedalumdrehung zu einem unerwünschten Abschalten des elektrischen Antriebs kommt. Erfindungsgemäß kann insbesondere auch unmittelbar nach dem Ende des Pedalierens mit einem Gangwechsel, insbesondere bei Nabenschaltungen, begonnen werden, ohne dass hierdurch übermäßige Belastungen der Bauteile erfolgen.

## Patentansprüche

1. Mit Muskelkraft und/oder Motorkraft betreibbares Fahrzeug, insbesondere Elektrofahrrad, umfassend:
- einen Kurbeltrieb (2), über welchen ein von einem Fahrer erzeugtes Fahrerdrehmoment einbringbar ist,
- einen elektrischen Antrieb (3), welcher ein Antriebsdrehmoment aufbringen kann, und
- eine Erfassung des Fahrerdrehmoments, und
- eine Steuereinheit (10), welche eingerichtet ist, den elektrischen Antrieb (3) bei Nichtvorhandensein des Fahrerdrehmoments abzuschalten,
- wobei die Steuereinheit (10) eine Überwachungseinrichtung umfasst, welche sicherstellt, dass bei Unterschreiten eines vorbestimmten Fahrerdrehmoments der elektrische Antrieb (3) noch für eine vorbestimmte Zeitspanne (t) betrieben wird, und
- wobei eine Dauer der vorbestimmten Zeitspanne (t) variabel in Abhängigkeit einer Trittfrequenz (f) des Fahrers ist.

2. Fahrzeug nach Anspruch 1, **dadurch gekennzeichnet, dass** die Steuereinheit (10) eingerichtet ist, die vorbestimmte Zeitspanne (t) mit steigender Trittfrequenz (f) kürzer zu setzen.

3. Fahrzeug nach einem der vorhergehenden Ansprüche, **dadurch gekennzeichnet, dass** die Steuereinheit (10) eingerichtet ist, die Trittfrequenz des Fahrers in Abhängigkeit einer Drehzahl des elektrischen Antriebs (3) zu bestimmen.

4. Fahrzeug nach einem der vorhergehenden Ansprüche, **dadurch gekennzeichnet, dass** die Steuereinheit (10) eingerichtet ist, die Trittfrequenz des Fahrers in Abhängigkeit eines Maximums (OT) des Fahrerdrehmoments (F) und/oder eines Minimums (UT) des Fahrerdrehmoments (F) zu bestimmen.

5. Fahrzeug nach einem der vorhergehenden Ansprüche, ferner umfassend einen Sensor zur Bestimmung der Trittfrequenz des Fahrers.

6. Fahrzeug nach einem der vorhergehenden Ansprüche, **dadurch gekennzeichnet, dass** die Steuereinheit (10) eingerichtet ist, die vorbestimmte Zeitspanne (t) kontinuierlich an die Trittfrequenz des Fahrers anzupassen.

7. Fahrzeug nach einem der vorhergehenden Ansprüche, **dadurch gekennzeichnet, dass** der elektrische Antrieb (3) am Kurbeltrieb (2) angeordnet ist.

8. Verfahren zum Betreiben eines mit Muskelkraft und/oder Motorkraft betreibbaren Fahrzeugs, insbesondere Elektrofahrrad, wobei das Fahrzeug einen Kurbeltrieb (2) und einen elektrischen Antrieb (3) umfasst, umfassend die Schritte:
- Bestimmen einer Trittfrequenz (f), mit welcher ein Fahrer den Kurbeltrieb (2) betätigt, und
- Erfassung des Fahrerdrehmoments, und
- Bestimmen einer vorbestimmten Zeitspanne (t), über welche der elektrische Antrieb (3) noch betrieben werden soll, wenn der Fahrer ein vorbestimmtes Fahrerdrehmoment unterschreitet, wobei die vorbestimmte Zeitspanne (t) variabel in Abhängigkeit der Trittfrequenz (f) bestimmt wird.

9. Verfahren nach Anspruch 8, **dadurch gekennzeichnet, dass** die Trittfrequenz (f) des Fahrers mittels einer Drehzahl des elektrischen Antriebs (3) und/oder mittels eines Maximums und/oder Minimums des Fahrerdrehmoments und/oder mittels eines Sensors bestimmt wird.

10. Verfahren nach Anspruch 8 oder 9, **dadurch gekennzeichnet, dass** die vorbestimmte Zeitspanne (t) kontinuierlich an die Trittfrequenz (f) des Fahrers angepasst wird.

## Claims

1. Vehicle which is able to be operated using muscle power and/or motor power, in particular an electric bicycle, comprising:
- a crank drive (2), by means of which a driver torque generated by a driver is able to be introduced,
- an electric drive (3), which can apply a drive torque, and
- measurement of the driver torque, and
- a control unit (10) which is configured to switch off the electric drive (3) in the absence of the driver torque,
- wherein the control unit (10) comprises a monitoring device which ensures that, when a predetermined driver torque is undershot, the electric drive (3) is still operated for a predetermined period of time (t), and
- wherein a duration of the predetermined period of time (t) is variable as a function of a pedal frequency (f) of the driver.

2. Vehicle according to Claim 1, **characterized in that** the control unit (10) is configured to set the predetermined period of time (t) shorter as pedal frequency (f) increases.

3. Vehicle according to either of the preceding claims, **characterized in that** the control unit (10) is configured to determine the pedal frequency of the driver as a function of a rotational speed of the electric drive (3).

4. Vehicle according to one of the preceding claims, **characterized in that** the control unit (10) is configured to determine the pedal frequency of the driver as a function of a maximum (OT) of the driver torque (F) and/or of a minimum (UT) of the driver torque (F).

5. Vehicle according to one of the preceding claims, further comprising a sensor for determining the pedal frequency of the driver.

6. Vehicle according to one of the preceding claims, **characterized in that** the control unit (10) is configured to continuously adjust the predetermined period of time (t) in line with the pedal frequency of the driver.

7. Vehicle according to one of the preceding claims, **characterized in that** the electric drive (3) is arranged on the crank drive (2).

8. Method for operating a vehicle which is able to be operated using muscle power and/or motor power, in particular an electric bicycle, wherein the vehicle comprises a crank drive (2) and an electric drive (3), comprising the steps of:
- determining a pedal frequency (f) with which a driver actuates the crank drive (2), and
- measuring the driver torque, and
- determining a predetermined period of time (t) over which the electric drive (3) is still to be operated when the driver drops below a predetermined driver torque,
wherein the predetermined period of time (t) is determined variably as a function of the pedal frequency (f).

9. Method according to Claim 8, **characterized in that** the pedal frequency (f) of the driver is determined by means of a rotational speed of the electric drive (3) and/or by means of a maximum and/or minimum of the driver torque and/or by means of a sensor.

10. Method according to Claim 8 or 9, **characterized in that** the predetermined period of time (t) is continuously adjusted in line with the pedal frequency (f) of the driver.

## Revendications

1. Véhicule à propulsion musculaire et/ou motorisée, notamment vélo électrique, comprenant :
- un mécanisme de pédalier (2), au moyen duquel peut être introduit un couple de conducteur généré par un conducteur,
- un entraînement électrique (3), qui peut appliquer un couple d'entraînement, et
- un dispositif de détection du couple du conducteur, et
- une unité de commande (10), laquelle est conçue pour désactiver l'entraînement électrique (3) en l'absence de couple moteur,
- dans lequel l'unité de commande (10) comprend un dispositif de surveillance qui garantit que, lorsque le couple du conducteur est inférieur à un couple prédéterminé du conducteur, l'entraînement électrique (3) est encore actionné pendant un intervalle de temps prédéterminé (t), et
- dans lequel une durée de l'intervalle de temps prédéterminé (t) est variable en fonction d'une fréquence de pédalage (f) du conducteur.

2. Véhicule selon la revendication 1, **caractérisé en ce que** l'unité de commande (10) est configurée pour raccourcir l'intervalle de temps prédéterminé (t) lorsque la fréquence de pédalage (f) augmente.

3. Véhicule selon l'une quelconque des revendications précédentes, **caractérisé en ce que** l'unité de commande (10) est conçue pour déterminer la fréquence de pédalage du conducteur en fonction d'une vitesse de rotation de l'entraînement électrique (3).

4. Véhicule selon l'une quelconque des revendications précédentes, **caractérisé en ce que** l'unité de commande (10) est conçue pour déterminer la fréquence de pédalage du conducteur en fonction d'un maximum (OT) du couple du conducteur (F) et/ou d'un minimum (UT) du couple du conducteur (F).

5. Véhicule selon l'une quelconque des revendications précédentes, comprenant en outre un capteur pour déterminer la fréquence de pédalage du conducteur.

6. Véhicule selon l'une quelconque des revendications précédentes, **caractérisé en ce que** l'unité de commande (10) est configurée pour adapter en continu l'intervalle de temps prédéterminé (t) à la fréquence de pédalage du conducteur.

7. Véhicule selon l'une quelconque des revendications précédentes, **caractérisé en ce que** l'entraînement électrique (3) est disposé sur le mécanisme de pédalier (2).

8. Procédé de fonctionnement d'un véhicule à propulsion musculaire et/ou motorisée, notamment d'un vélo électrique, le véhicule comprenant un mécanisme de pédalier (2) et un entraînement électrique (3), comprenant les étapes consistant à :
- déterminer une fréquence de pédalage (f) avec laquelle un conducteur actionne le mécanisme de pédalier (2), et
- détecter le couple du conducteur, et
- déterminer un intervalle de temps prédéterminé (t) pendant lequel l'entraînement électrique (3) doit encore être actionné lorsque le conducteur produit un couple inférieur à un couple prédéterminé du conducteur,
dans lequel l'intervalle de temps prédéterminé (t) est déterminé de manière variable en fonction de la fréquence de pédalage (f).

9. Procédé selon la revendication 8, **caractérisé en ce que** la fréquence de pédalage (f) du conducteur est déterminée au moyen d'une vitesse de rotation de l'entraînement électrique (3) et/ou au moyen d'un maximum et/ou d'un minimum du couple du conducteur et/ou au moyen d'un capteur.

10. Procédé selon la revendication 8 ou 9, **caractérisé en ce que** l'intervalle de temps prédéterminé (t) est adapté en continu à la fréquence de pédalage (f) du conducteur.
